# FASCICULE DE BREVET EUROPEEN

(11) **EP 1 048 524 B1**
(45) Date de publication et mention de la délivrance du brevet: **21.03.2007**
(21) Numéro de dépôt: 00401190.4
(22) Date de dépôt: 28.04.2000
(51) Int. Cl.: B60Q 1/52, B60Q 1/48

(54) **Dispositif de fixation d'un capteur de positionnement et pièce de carrosserie munie d'un tel dispositif.**
Befestigungseinrichtung für einen Lagesensor und damit verbundenes Karosserieteil
Mounting device for position sensor and associated vehicle body part

(30) Priorité: 30.04.1999 FR 9905524
(43) Date de publication de la demande: 02.11.2000
(73) Titulaire: COMPAGNIE PLASTIC OMNIUM, 69007 Lyon (FR)
(72) Inventeur: Villiere, Franck, 69002 Lyon (FR); Marcellin, Alain, 01640 Jujurieux (FR)
(74) Mandataire: Remy, Vincent Noel Paul

(56) Documents cités:
- US-A- 4 636 997
- US-A- 5 844 471

## Description

La présente invention a pour objet un dispositif de fixation d'un accessoire, notamment un capteur de positionnement de véhicule automobile et une pièce de carrosserie munie d'un tel dispositif.

On sait qu'un capteur de positionnement est un dispositif qui est habituellement monté dans le ou les pare-chocs d'un véhicule automobile et qui permet au conducteur d'être informé de la distance qui sépare son ou ses pare-chocs d'éventuels obstacles situés devant et derrière son véhicule.

Ces dispositifs sont notamment utiles lors des manoeuvres de stationnement, l'information étant fournie au conducteur généralement sous la forme d'un signal sonore intermittent dont les signaux sont d'autant plus rapprochés que la distance entre le pare-chocs et l'obstacle se réduit.

Le capteur est situé du côté de la pièce de carrosserie dirigé vers l'intérieur du véhicule, en regard d'un orifice pratiqué dans ladite pièce de carrosserie. Un exemple d'un tel capteur est connu de US-A-5 844 471.

Sa zone sensible, qui est susceptible de détecter des obstacles se trouvant à proximité, est dirigée vers l'extérieur du véhicule, son champ de détection étant dégagé grâce à l'orifice pratiqué dans ladite pièce de carrosserie.

En termes de fonctionnement, ces dispositifs donnent entière satisfaction.

En revanche, leur montage sur les pare-chocs, ou, pour certains véhicules, sur d'autres pièces de carrosserie, présente l'inconvénient de les rendre inaccessibles depuis l'extérieur du véhicule, sauf à démonter complètement la pièce de carrosserie.

En effet, le montage et la fixation du capteur de positionnement s'effectuent par l'intérieur de la pièce de carrosserie, de sorte qu'une fois celle-ci positionnée sur le véhicule, il n'est plus possible d'accéder aux organes de fixation du capteur pour le démonter, par exemple pour le remplacer en cas de panne.

La présente invention vise à fournir un nouveau dispositif de fixation d'un accessoire, notamment un capteur de positionnement, qui permette de le démonter depuis l'extérieur du véhicule, sans avoir à démonter la pièce de carrosserie qui le supporte.

Ledit document montre un dispositif de fixation d'un accessoire tel qu'un capteur de positionnement sur une pièce de carrosserie d'un véhicule automobile, ledit accessoire se trouvant du côté de la pièce de carrosserie dirigé vers l'intérieur du véhicule, en regard d'un orifice pratiqué dans ladite pièce de carrosserie, le dispositif comporte une chemise apte à contenir l'accessoire et un support apte à être assujetti à la pièce de carrosserie, du côté de ladite pièce de carrosserie, dirigé vers l'intérieur du véhicule, ladite chemise contenant l'accessoire étant en outre apte à être retirée du support.

La présente invention a pour objet un dispositif de fixation d'un accessoire tel qu'un capteur de positionnement sur une pièce de carrosserie d'un véhicule automobile, ledit accessoire se trouvant du côté de la pièce de carrosserie dirigé vers l'intérieur du véhicule, en regard d'un orifice pratiqué dans ladite pièce de carrosserie, le dispositif étant caractérisé par le fait qu'il comporte une chemise apte à contenir l'accessoire et un support apte à être assujetti à la pièce de carrosserie, du côté de ladite pièce de carrosserie dirigé vers l'intérieur du véhicule, la chemise contenant l'accessoire étant apte à prendre place à l'intérieur du support par insertion depuis l'extérieur du véhicule à travers l'orifice pratiqué dans la pièce de carrosserie, ladite chemise contenant l'accessoire étant en outre apte à être retirée du support depuis l'extérieur du véhicule par extraction à travers l'orifice pratiqué dans la pièce de carrosserie.

En d'autres termes, la présente invention consiste à intercaler, entre l'accessoire et la pièce de carrosserie, un mécanisme aménagé pour permettre l'insertion et l'extraction de l'accessoire depuis l'extérieur du véhicule.

L'accessoire en question peut être constitué par un capteur de positionnement, mais l'invention n'est pas limitée à ce type d'accessoire électrique, et s'applique par exemple à la fixation sur un véhicule d'autres types de capteurs, ou d'une antenne par exemple.

Dans un mode de réalisation particulier de l'invention, la chemise comporte, dans son épaisseur, au moins un passage permettant l'introduction d'un outil d'extraction depuis l'extérieur du véhicule, cet outil permettant, à travers l'orifice, de libérer ou de retirer du support assujetti à la pièce de carrosserie la chemise contenant l'accessoire.

Dans un mode de réalisation particulier de l'invention, le support ou la chemise comporte un moyen de verrouillage de la chemise insérée dans ledit support.

Ce moyen de verrouillage est accessible par un outil depuis l'extérieur du véhicule, à travers le passage ménagé dans l'épaisseur de la chemise.

Dans une variante préférée de ce mode de réalisation, le support ou la chemise comporte en outre un organe élastique qui repousse la chemise vers l'extérieur du véhicule lorsque ladite chemise est insérée dans le support, de manière que la libération de l'organe de verrouillage provoque l'expulsion au moins partielle de la chemise en dehors du support vers l'extérieur du véhicule, ce qui permet de la saisir pour l'extraire complètement du support.

Dans une autre variante, l'outil qui pénètre dans le passage ménagé dans l'épaisseur de la chemise prend appui sur une butée de la chemise et permet l'extraction de cette dernière par une traction dirigée vers l'extérieur du véhicule.

Par exemple, l'outil peut s'engager jusqu'au delà de l'extrémité intérieure de la chemise et prendre appui sur le fond de cette dernière ou sur l'accessoire lui-même, de manière qu'une traction exercée sur l'outil se traduise par une poussée sur la chemise ou l'accessoire.

La présente invention a également pour objet une pièce de carrosserie, notamment un pare-chocs, munie d'un dispositif de fixation d'un accessoire tel que décrit ci-dessus.

Dans le but de mieux faire comprendre l'invention, on va en décrire maintenant des modes de réalisation donnés à titre d'exemples non limitatifs de la portée de l'invention, en référence au dessin annexé dans lequel :
- la figure 1 est une vue en perspective éclatée de trois quarts arrière d'un dispositif de fixation selon un premier mode de réalisation de l'invention,
- la figure 2 est une vue en perspective éclatée de trois quarts avant du même dispositif,
- les figures 3 et 4 sont des vues en section des figures 1 et 2,
- les figures 5 et 6 sont des vues analogues à la figure 4 montrant le dispositif en cours de montage sur un pare-chocs,
- la figure 7 est une vue en perspective de trois quarts arrière du capteur et de la chemise,
- la figure 8 est une vue en perspective de trois quarts avant du capteur et de la chemise,
- la figure 9 est une vue de trois quarts avant du dispositif à l'état monté,
- la figure 10 est une vue de trois quarts arrière du dispositif à l'état monté,
- la figure 11 est une vue en perspective d'un outil de démontage de la chemise,
- les figures 12 à 14 sont des sections analogues à la figure 4 montrant la chemise en cours de démontage,
- la figure 15 est une vue en perspective de trois quarts avant d'un dispositif selon un deuxième mode de réalisation de l'invention,
- la figure 16 est une vue en perspective de trois quarts arrière du même dispositif,
- la figure 17 est une vue en coupe selon XVII-XVII de la figure 16,
- la figure 18 est une vue en coupe selon XVIII-XVIII de la figure 16,
- la figure 19 est une vue en coupe selon XIX-XIX de la figure 16,
- la figure 20 est une vue en perspective de trois quarts avant de la chemise montée dans le support, et
- la figure 21 est une vue en perspective de trois quarts arrière de la chemise montée dans le support.

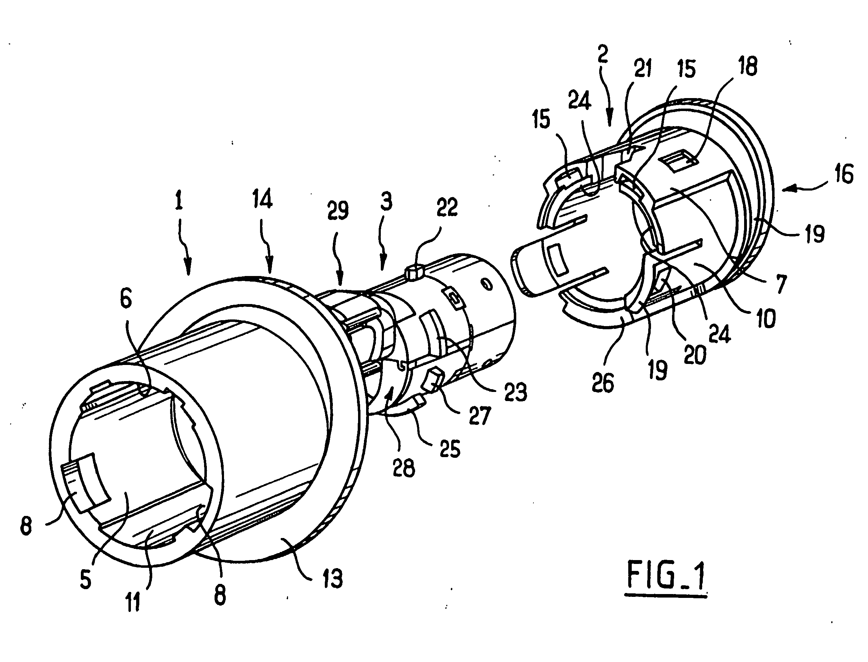

Dans le premier mode de réalisation des figures 1 à 14, le dispositif comprend un support 1 et une chemise 2 apte à recevoir un capteur de positionnement 3.

Par convention, on appellera faces avant et arrière des éléments décrits leurs faces d'extrémités dirigées respectivement vers l'extérieur et vers l'intérieur du véhicule.

Le support 1 et la chemise 2 sont réalisés en matière plastique injectée.

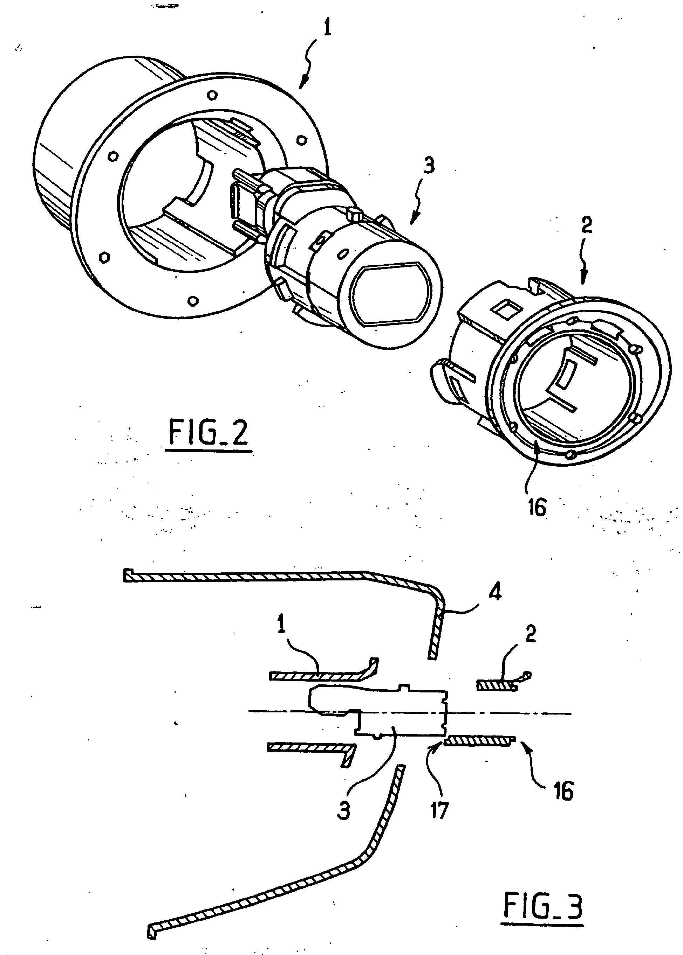

Le support 1 est destiné à être assujetti à la paroi d'un pare-chocs 4, comme on le voit aux figures 3, 4, 5, 6, 12, 13, 14, par exemple par soudage de sa périphérie.

Le support 1 présente une forme sensiblement cylindrique creuse, munie, intérieurement, de formes d'orientation qui coopèrent avec des formes correspondantes prévues sur la paroi extérieure de la chemise 2.

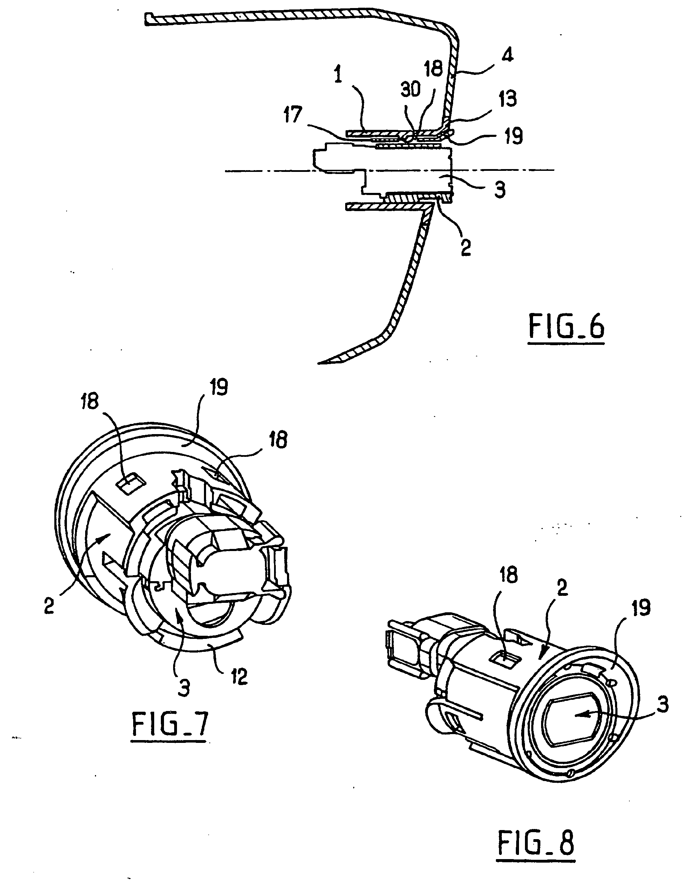

Notamment, la paroi intérieure 5 du support comporte un dégagement supérieur 6 qui coïncide avec une surépaisseur 7 de la paroi de la chemise, deux dégagements latéraux inférieurs 8 qui coïncident avec les bords inclinés 9 de deux languettes 10 de la chemise 12 et un dégagement inférieur 11 qui correspond à une surépaisseur inférieure 12 (figure 7) de la chemise.

Une collerette évasée 13 termine le support 1 sur sa face avant 14.

La chemise 2 présente une forme globalement tubulaire cylindrique.

Dans sa région supérieure où la paroi est plus épaisse, la chemise comporte deux passages traversant longitudinaux 15 qui s'étendent depuis la face avant 16 de la chemise jusqu'à sa face arrière 17.

Une fenêtre 18 est découpée dans la paroi extérieure de chacun des passages 15 et débouche dans le passage correspondant.

Une collerette évasée 19 termine la chemise 2 sur sa face avant 16.

La paroi 2 de la chemise comporte en outre, découpées longitudinalement depuis la face arrière 17 de la chemise, deux languettes élastiques 10 terminées, chacune, par un bord incliné 9 qui fait saillie de la paroi extérieure de la chemise et vient se loger dans les dégagements 8 prévus à cet effet sur le support 1 lorsque la chemise est insérée dans le support.

Chacune de ces languettes 10 est munie d'une fenêtre traversante 20.

La paroi de la chemise présente un certain nombre de découpes axiales qui sont destinées à positionner et immobiliser le capteur 3, engagé dans la chemise par la face arrière de cette dernière.

Une première découpe 21, en V, guide en rotation le capteur 3 lors de son introduction dans la chemise, grâce à un téton 22 du capteur, qui vient prendre place au fond de ladite découpe en V.

Le capteur comporte également une butée annulaire 23 qui vient prendre appui contre un épaulement axial 24 de la chemise, formée dans l'épaisseur de la moitié supérieure de la chemise, en retrait par rapport à la face arrière 17 de la chemise.

Une même butée annulaire 25 s'étend, sur un angle plus important d'environ 90°, en partie inférieure du capteur, pour prendre appui contre un épaulement 26 de la paroi de la chemise.

Enfin, deux tétons annulaires 27 sont prévus en regard des fenêtres 20 des pattes élastiques 10 de la chemise, pour y pénétrer lorsque le capteur est inséré dans la chemise.

Par ailleurs, le capteur comporte, en saillie de sa face arrière 28, une partie de connexion 29 qui ne sera pas détaillée ici.

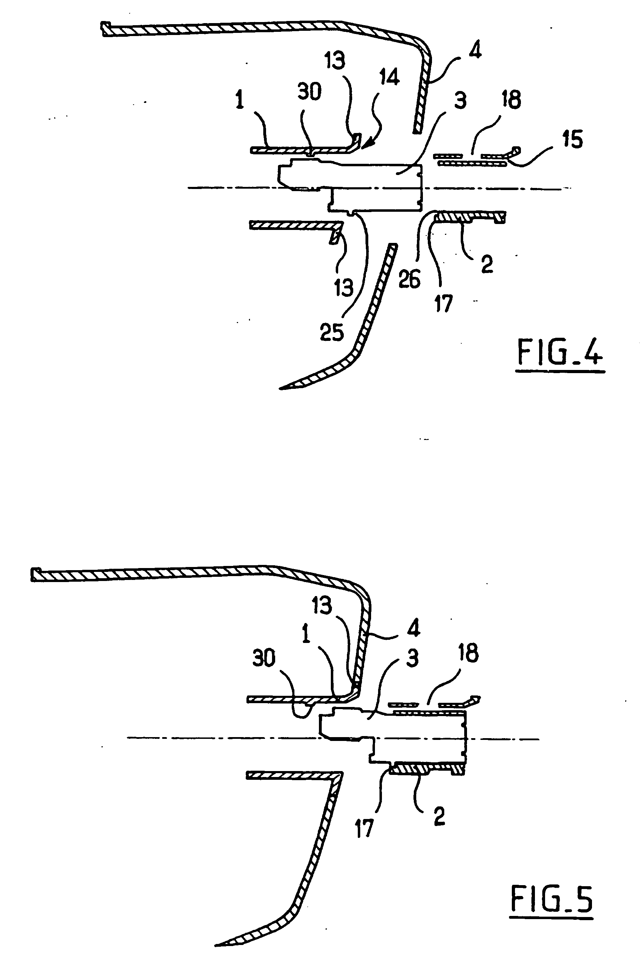

Pour monter le capteur sur un pare-chocs, on exécute les étapes illustrées par les figures 5 et 6.

Dans un premier temps, comme on le voit à la figure 5, le support 1 est solidarisé au pare-chocs 4 par exemple par soudure de la périphérie de sa collerette 13 dans l'épaisseur de la paroi du pare-chocs.

Le capteur 3 est ensuite introduit dans la chemise 2 en étant guidé en rotation par son téton supérieur 13, retenu vers l'avant par les épaulements 24, 26 de la chemise contre lesquels les butées annulaires 23, 25 du capteur prennent appui et retenu vers l'arrière par les tétons annulaires 27 qui s'engagent dans les fenêtres 20 des pattes élastiques, par déformation de ces dernières.

L'ensemble constitué par le capteur 3 et la chemise 2 qui le contient, que l'on voit sur les figures 7 et 8, est ensuite introduit dans le support, comme on le voit à la figure 6.

La chemise 2 est insérée dans le support jusqu'à ce que sa collerette évasée 19 vienne s'appliquer contre la collerette évasée 13 du support. Comme on le voit sur les figures 4, 5 et 6, le support 1 comporte, en saillie de son dégagement supérieur 6, deux protubérances sphériques 30 qui se trouvent sur le chemin des fenêtres 18 lors de l'insertion de la chemise dans le support.

Lors de l'insertion, les deux protubérances 30 s'escamotent par déformation du support pour laisser passer la paroi extérieure de la chemise.

Lorsque la chemise arrive en butée par sa collerette 19, les fenêtres 18 de la chemise arrivent en regard des protubérances, lesquelles reviennent en position et immobilisent la chemise dans le support.

On voit que le montage du capteur sur le pare-chocs peut s'effectuer, grâce à l'invention, depuis la face extérieure du pare-chocs.

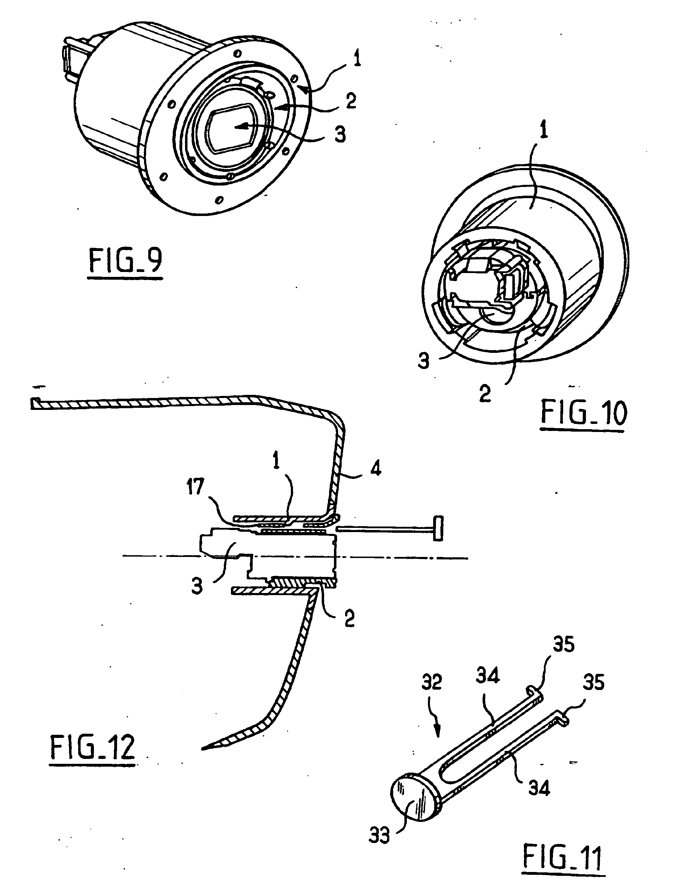

Une fois l'insertion réalisée, on obtient l'ensemble représenté aux figures 9 et 10.

Pour démonter le capteur depuis l'extérieur du pare-chocs, on utilise l'outil 32 représenté à la figure 11, qui comporte une poignée 33 en forme de plaque ovoïdale et deux branches parallèles 34, terminées, chacune, par une patte rigide 35 perpendiculaire auxdites branches et dirigée vers l'extérieur.

Chaque branche 34 de l'outil s'introduit dans l'un des deux passages traversants longitudinaux 15 jusqu'à ce que sa patte rigide 35 débouche de la face arrière 17 de la chemise.

Pour son introduction, l'outil subit une légère déformation élastique visant à rapprocher les extrémités de ses branches 34 pour introduire les pattes rigides 35 dans les passages traversants longitudinaux 15.

Lorsque les pattes rigides 35 arrivent au-delà de la face arrière 17 de la chemise 35, les deux branches de l'outil retrouvent leur forme initiale et les pattes rigides prennent appui contre la face arrière de la chemise.

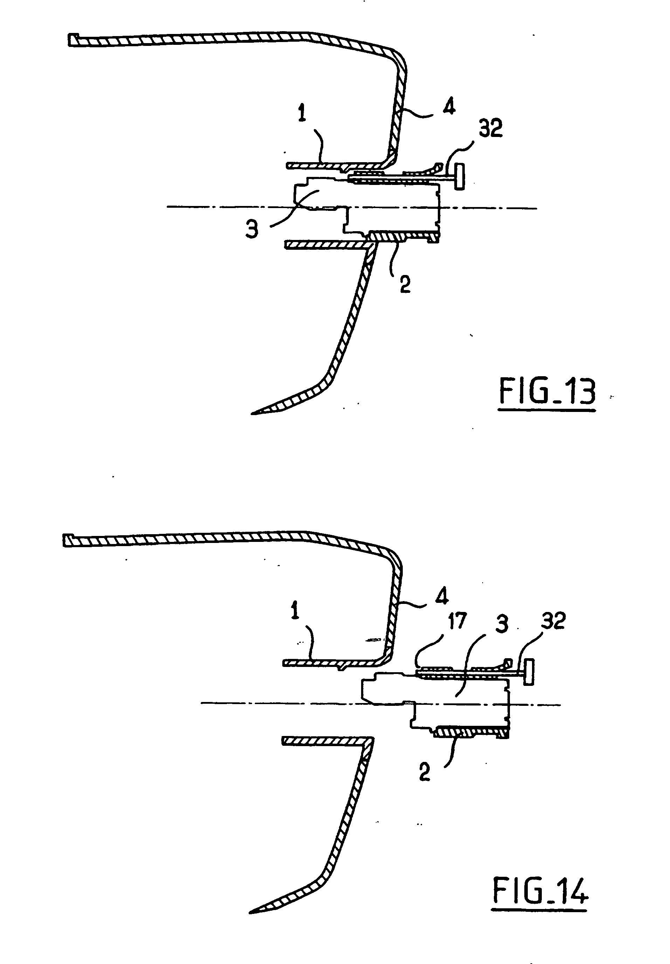

L'outil se trouve alors dans la position représentée à la figure 13.

Il ne reste plus qu'à exercer une traction sur l'outil pour retirer la chemise du support, les protubérances 30 s'escamotant de la même manière que lors du montage.

Dans une variante non représentée, les protubérances 30 comportent chacune une base cylindrique terminée par une tête sphérique qui pénètre dans la section de chaque passage longitudinal 15 et est repoussée vers le haut par l'outil 32 dont les branches 34 occupent toute l'épaisseur des passages longitudinaux, ce qui facilite l'escamotage des protubérances, tout en empêchant un démontage intempestif du capteur.

Comme cela vient d'être décrit, non seulement le montage mais également le démontage du capteur peut être effectué par l'avant du pare-chocs, grâce au dispositif selon l'invention.

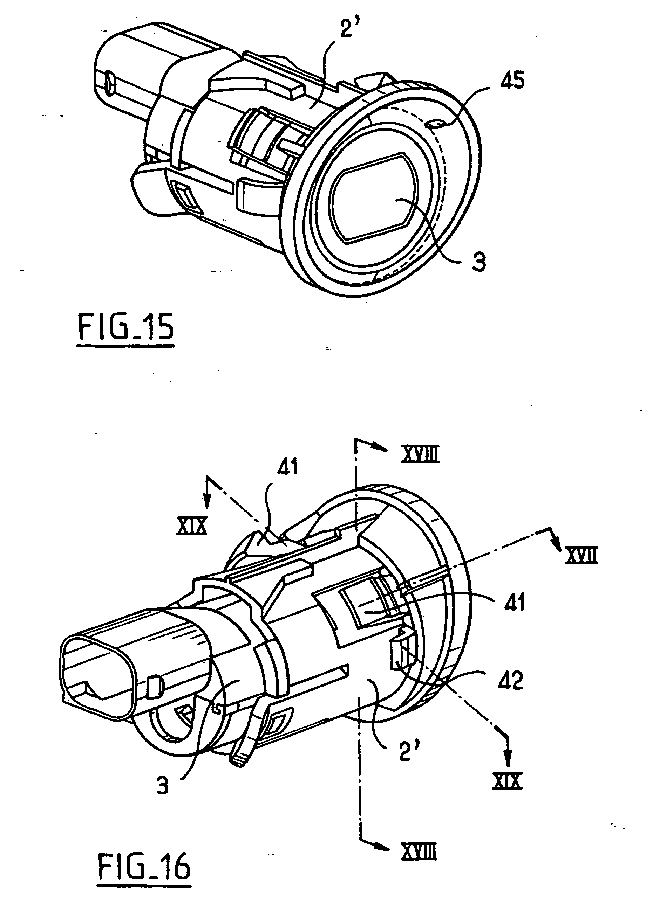

Dans le mode de réalisation des figures 15 et suivantes, la chemise 2' et le support 1' présentent une structure différente de ce qui vient d'être décrit.

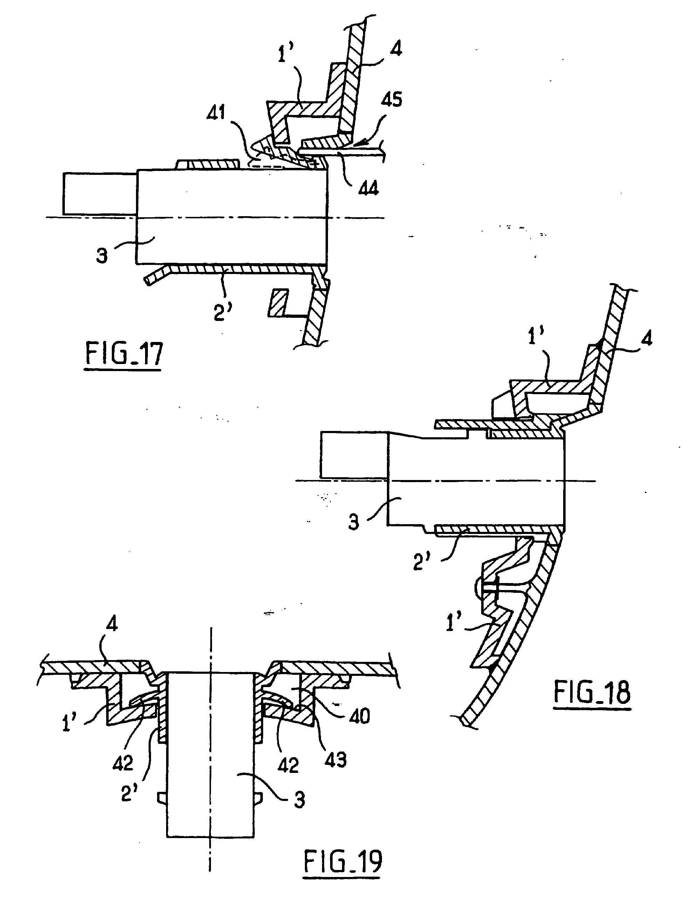

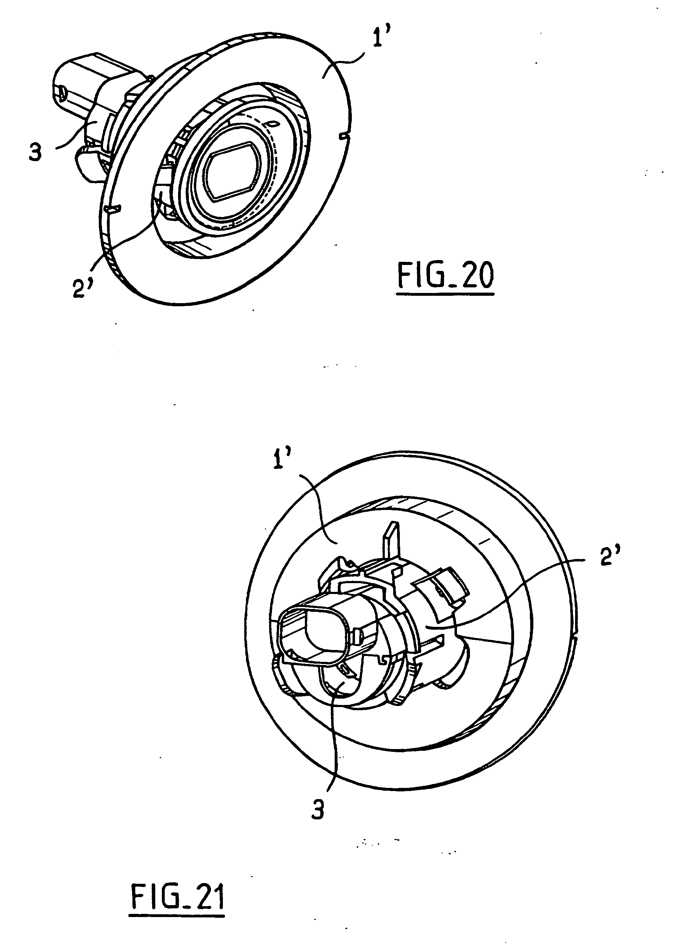

Tout d'abord, comme on le voit sur les figures 18, 19, 20 et 21, le support 1' se limite à une bague creuse qui est assujettie au pare-chocs mais ne comporte aucune partie visible depuis l'extérieur du pare-chocs.

Ladite bague 1' est soudée ou collée contre la face arrière du pare-chocs.

La bague 1' délimite un logement annulaire 40 en retrait de la paroi du pare-chocs 4.

La chemise 2' est conformée pour venir à effleurement de la paroi du pare-chocs, en s'encliquetant sur la bague 1' constituant le support.

A cet effet, la chemise 2' comporte, en saillie de sa paroi extérieure, deux languettes élastiques 41 en forme de crochets et deux pattes élastiques 42 dirigées vers l'arrière.

Comme on le voit à la figure 17, les crochets élastiques 41 réalisent l'encliquetage de la chemise dans la bague, par simple insertion de l'une dans l'autre.

Simultanément, comme représenté à la figure 19, les pattes élastiques 42 prennent appui contre la paroi avant 43 de la bague 1' et se déploient élastiquement dans le logement annulaire 40 délimité par la bague, en exerçant sur la chemise 2' une force de réaction tendant à repousser cette dernière vers l'extérieur du pare-chocs. Cette force de réaction est maintenue tant que la chemise est encliquetée dans la bague.

Comme on le voit à la figure 17, en introduisant un outil 44 de forme appropriée dans les passages longitudinaux traversants 45 de la chemise, on escamote les crochets 41 et on libère la chemise 2' qui, sous l'effet de la force de réaction des pattes élastiques 42 s'appuyant sur la bague, s'expulse automatiquement de la bague sur une distance suffisante pour permettre sa préhension et son extraction à la main.

Les autres éléments du dispositif selon ce mode de réalisation qui portent les mêmes numéros de référence que sur les figures 1 à 14 sont considérés comme identiques à ceux du premier mode de réalisation.

On voit que ce mode de réalisation permet également de monter et de démonter le capteur de positionnement depuis l'extérieur du pare-chocs.

Il est bien entendu que les modes de réalisation qui viennent d'être décrits ne présentent aucun caractère limitatif et qu'ils pourront recevoir toutes modifications désirables sans sortir pour cela du cadre de l'invention defini par les revendications.

En particulier, on peut remplacer le capteur de positionnement par tout type d'organe de détection ou de réception par exemple.

## Revendications

1. Dispositif de fixation d'un accessoire tel qu'un capteur de positionnement (3) sur une pièce de carrosserie (4) d'un véhicule automobile, ledit accessoire (3) se trouvant du côté de la pièce de carrosserie (4) dirigé vers l'intérieur du véhicule, en regard d'un orifice pratiqué dans ladite pièce de carrosserie, le dispositif comportant une chemise (2,2') apte à contenir l'accessoire (3) et un support (1,1') apte à être assujetti à la pièce de carrosserie, du côté de ladite pièce de carrosserie, dirigé vers l'intérieur du véhicule, le dispositif étant **caractérisé en ce que** la chemise (2, 2') contenant l'accessoire (3) est apte à prendre place à l'intérieur du support par insertion depuis l'extérieur du véhicule à travers l'orifice pratiqué dans la pièce de carrosserie, ladite chemise (2, 2') contenant l'accessoire (3) étant en outre apte à être retirée du support (1,1') depuis l'extérieur du véhicule par extraction à travers l'orifice pratiqué dans la pièce de carrosserie (4).

2. Dispositif selon la revendication 1, **caractérisé par le fait que** l'accessoire est un capteur de positionnement.

3. Dispositif selon la revendication 1 ou 2, **caractérisé par le fait que** la chemise (2, 2') comporte, dans son épaisseur, au moins un passage (15) permettant l'introduction d'un outil (32, 44) d'extraction depuis l'extérieur du véhicule, cet outil permettant de libérer ou de retirer du support assujetti à la pièce de carrosserie la chemise (2, 2') contenant l'accessoire à travers l'orifice.

4. Dispositif selon l'une quelconque des revendications 1 à 3, **caractérisé par le fait que** le support ou la chemise comporte un moyen de verrouillage (30, 41) de la chemise insérée dans ledit support.

5. Dispositif selon la revendication 4, **caractérisé par le fait que** le moyen de verrouillage (30) est accessible par un outil (32) depuis l'extérieur du véhicule, à travers le passage (15) ménagé dans l'épaisseur de la chemise (2).

6. Dispositif selon l'une quelconque des revendications 4 et 5, **caractérisé par le fait que** le support (1') ou la chemise (2') comporte en outre un organe élastique (42) qui repousse la chemise (2') vers l'extérieur du véhicule lorsque ladite chemise est insérée dans le support, de manière que la libération de l'organe de verrouillage (41) provoque l'expulsion au moins partielle de la chemise (2') en dehors du support (1') vers l'extérieur du véhicule, ce qui permet de la saisir pour l'extraire complètement du support.

7. Dispositif selon l'une quelconque des revendications 4 et 5, **caractérisé par le fait que** l'outil (32) qui pénètre dans le passage (15) ménagé dans l'épaisseur de la chemise prend appui sur une butée de la chemise et permet l'extraction de cette dernière par une traction dirigée vers l'extérieur du véhicule.

8. Pièce de carrosserie, notamment pare-chocs (4), munie d'un dispositif de fixation d'un accessoire, notamment un capteur de positionnement, selon l'une quelconque des revendications 1 à 7.

## Claims

1. A device for fixing an accessory such as a positioning sensor (3) at a bodywork part (4) of a motor vehicle, said accessory (3) being found on the side of the bodywork part (4) that faces towards the inside of the vehicle and in register with an orifice formed in said bodywork part, the device comprising a jacket (2, 2') suitable for containing the accessory (3), and a support (1, 1') suitable for being secured to the bodywork part on the side of said bodywork part that faces towards the inside of the vehicle, the device being **characterized in that** the jacket (2, 2') containing the accessory (3) is suitable for being received inside the support by being inserted from the outside of the vehicle through the orifice formed in the bodywork part, said jacket (2, 2') containing the accessory (3) also being suitable for being withdrawn from the support (1, 1') from the outside of the vehicle by being extracted through the orifice formed in the bodywork part (4).

2. A device according the claim 1, **characterized in that** the accessory is a positioning sensor.

3. A device according to claim 1 or 2, **characterized in that** the jacket (2, 2') has at least one passage (15) in its thickness enabling an extractor tool (32, 44) to be inserted from the outside of the vehicle, said tool making it possible via the orifice for the jacket (2, 2) containing the accessory to be released or withdrawn from the support secured to the bodywork part.

4. A device according to anyone of claims 1 to 3, **characterized in that** the support or the jacket includes locking means (30, 41) for locking the jacket when inserted in the support.

5. A device according to claim 4, **characterized in that** the locking means (30) is accessible by a tool (32) from outside the vehicle by passing through the passage (15) formed in the thickness of the jacket (2).

6. A device according to anyone of claims 4 and 5, **characterized in that** the support (1') or the jacket (2') further includes a resilient member (42) which urges the jacket (2') out from the vehicle when said jacket is inserted in the support, such that releasing the locking member (41) causes the jacket (2') to be expelled at least in part from the support (1') to the outside of the vehicle, thereby enabling it to be grasped and extracted completely from the support.

7. A device according to anyone of claims 4 and 5, wherein the tool (32) which penetrates through the passage (15) formed in the thickness of the jacket bears against an abutment of the jacket and enables the jacket to be extracted by applying traction directed towards the outside of the vehicle.

8. A bodywork part, in particular a bumper (4), provided with a device for fixing an accessory, in particular a positioning sensor, in accordance with anyone of claims 1 to 7.

## Patentansprüche

1. Befestigungsvorrichtung für ein Zubehörteil wie etwa ein Lagesensor (3) an einem Karosserieteil (4) eines Fahrzeuges, wobei sich das Zubehörteil (3) zum Karosserieteil hin (4) befindet, ins Innere des Fahrzeuges gerichtet ist und gegenüber einer Öffnung liegt, die in dem Karosserieteil angebracht ist, wobei die Vorrichtung aus einer Verkleidung (2, 2') besteht, die in der Lage ist, das Zubehörteil (3) und eine Halterung (1, 1') aufzunehmen, die so beschaffen ist, dass sie an dem Karosserieteil in Richtung des Karosserieteiles befestigt ist und ins Innere des Fahrzeuges gerichtet ist, wobei die Vorrichtung **dadurch gekennzeichnet ist, dass** das Zubehörteil (3) von außerhalb des Fahrzeuges durch die Öffnung, die in dem Teil der Karosserie angebracht ist, durch Einschieben im Inneren der Halterung angeordnet werden kann, wobei die Verkleidung (2, 2'), die das Zubehörteil (3) enthält, außerdem so beschaffen ist, dass sie aus der Halterung (1, 1`) von außen am Fahrzeug durch die Öffnung herausgezogen werden kann, die sich an dem Teil der Karosserie (4) befindet.

2. Vorrichtung nach Anspruch 1, **dadurch gekennzeichnet, dass** das Zubehörteil ein Lagesensor ist.

3. Vorrichtung nach Anspruch 1 oder 2, **dadurch gekennzeichnet, dass** die Verkleidung (2, 2') in ihrer Wandung mindestens einen Durchlass (15) aufweist, der von der Außenseite des Fahrzeuges her das Einführen eines Werkzeuges (32, 44) zum Herausziehen erlaubt, wobei dieses Werkzeug das Lösen oder das Herausziehen der Verkleidung (2, 2'), die das Zubehörteil enthält, aus der Halterung, die an dem Karosserieteil befestigt ist, durch die Öffnung hindurch erlaubt.

4. Vorrichtung nach einem der Ansprüche 1 bis 3, **dadurch gekennzeichnet, dass** die Halterung oder die Verkleidung ein Mittel zum Verriegeln (30, 41) der Verkleidung umfasst, die in der Halterung eingefügt ist.

5. Vorrichtung nach Anspruch 4, **dadurch gekennzeichnet, dass** das Verriegelungsmittel (30) vom Äußeren des Fahrzeuges her über den Durchlass (15), der in der Wandung der Verkleidung (2) ausgespart ist, mit einem Werkzeug (32) zugänglich ist.

6. Vorrichtung nach einem beliebigen der Ansprüche 4 und 5, **dadurch gekennzeichnet, dass** die Halterung (1') oder die Verkleidung (2') außerdem ein elastisches Bauteil (42) aufweist, das die Verkleidung (2') zum Äußeren des Fahrzeuges hin herausdrückt, wenn die Verkleidung in die Halterung eingesetzt wird, und zwar derart, dass die Freigabe der Verriegelung (41) das zumindest teilweise Ausstoßen der Verkleidung (2') aus der Halterung zum Äußeren des Fahrzeuges hin bewirkt, wodurch man sie greifen kann, um sie vollständig aus der Halterung herauszuziehen.

7. Vorrichtung nach einem beliebigen der Ansprüche 4 und 5, **dadurch gekennzeichnet, dass** das Werkzeug (32), das durch den Durchlass (15) in der Wandung der Verkleidung eindringt, auf einen Anschlag in der Verkleidung trifft und das Herausziehen der Letzteren mittels Ziehens in Richtung des Fahrzeugäußeren gestattet.

8. Karosserieteil, insbesondere Stoßfänger (4), ausgerüstet mit einer Vorrichtung zum Befestigen eines Zubehörteiles, insbesondere eines Lagesensors, nach einem der Ansprüche 1 bis 7.
